# EUROPÄISCHE PATENTSCHRIFT

(11) **EP 3 608 262 B1**
(45) Veröffentlichungstag und Bekanntmachung des Hinweises auf die Patenterteilung: **20.09.2023**
(21) Anmeldenummer: 19190514.0
(22) Anmeldetag: 07.08.2019
(51) Int. Cl.: B65G 19/28

(54) **KETTENFÖRDEREINRICHTUNG, SOWIE VERFAHREN ZUM BEREITSTELLEN EINER UNVERBRAUCHTEN LAUFBAHN EINER KETTENFÖRDEREINRICHTUNG**
CHAIN CONVEYOR DEVICE AND METHOD FOR PROVIDING AN UNUSED PATH OF A CHAIN CONVEYOR
DISPOSITIF DE CHAÎNES DE TRANSFERT ET PROCÉDÉ DE FOURNITURE D'UN RAIL DE CIRCULATION INUTILISÉ D'UN DISPOSITIF DE CHAÎNES DE TRANSFERT

(30) Priorität: 07.08.2018 DE 102018119215
(43) Veröffentlichungstag der Anmeldung: 12.02.2020
(73) Patentinhaber: GeicoTaikisha GmbH, 71083 Herrenberg (DE)
(72) Erfinder: Jürgen, BRAUN, 72149 Neustetten (DE)
(74) Vertreter: Dantz, Jan Henning

(56) Entgegenhaltungen:
- DE-A1- 3 301 435
- DE-A1- 3 609 096
- JP-A- S6 040 309
- JP-A- 2015 086 022

## Beschreibung

Die vorliegende Erfindung betrifft eine Kettenfördereinrichtung umfassend eine Förderkette und ein Führungsgehäuse zur Führung der Förderkette, sowie ein Verfahren zum Bereitstellen einer unverbrauchten Laufbahn einer Kettenfördereinrichtung.

Die DE 33 01 435 A1 offenbart ein Strebfördermittel für den Untertagebergbau.

Der Schenkel (Bezugszeichen 8) eines L-förmigen Abschnitts der Seitenprofile des Fördermittels dient dabei als Maschinenfahrbahn. Dabei sind zwei Seitenprofile mit einem wendbares Bodenblech miteinander verbunden.

Als weiterer relevanter Stand der Technik ist die JP 2015 086022 A zu nennen. Die JP 2015 086022 A offenbart die Merkmale des Oberbegriffs des Anspruchs 1.

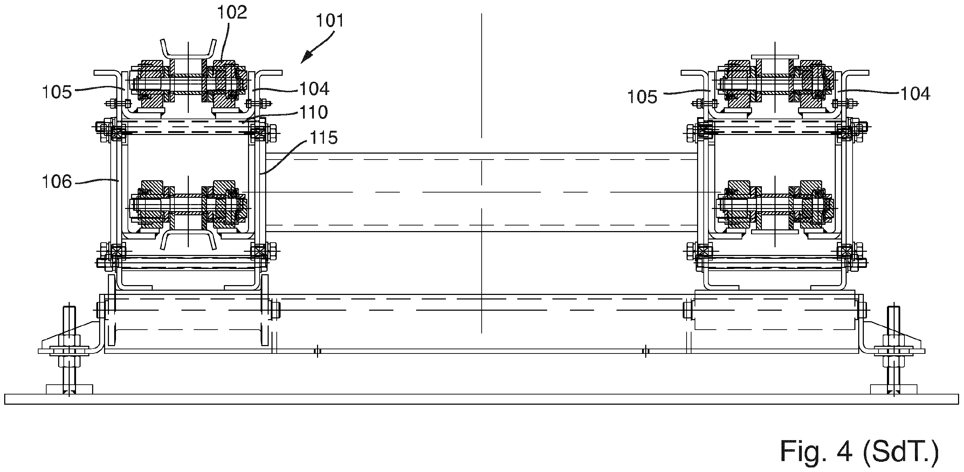

Fig. 4 zeigt eine an sich bekannte Kettenfördereinrichtung aus dem Stand der Technik. Die Laufbahnen für die Kettentragrollen einer Förderkette sind in dieser Variante an einem L-Profil angeordnet.

Es ist bekannt, dass sich die Laufbahnen einer Kettenfördereinheit nach mehrjährigem Gebrauch aufgrund der intensiven mechanischen Belastungen verbrauchen. Es kommt u.a. zu Abrieb und Walzverformungen der Laufbahnen durch die Kettentragrollen der Förderkette der Kettenfördereinrichtung.

Die Lieferung neuer Ersatzteile kann allerdings zugleich mit hohen Kosten für die Ausfallzeit verbunden sein.

Ausgehend von der vorgenannten Betrachtung ist es die Aufgabe der vorliegenden Erfindung eine Kettenfördereinrichtung bereitzustellen, bei welcher ein einfacher Austausch möglich ist und die Austauschteile bereits durch die Kettenfördereinrichtung vorgehalten werden.

Diese Aufgabe wird durch eine Kettenfördereinrichtung mit den Merkmalen des Anspruchs 1 gelöst.

Eine erfindungsgemäße Kettenfördereinrichtung kann insbesondere als Teil eines Schleppkettenförderers oder als Teil eines Tragkettenförderers ausgebildet sein. Sie umfasst eine Förderkette, vorzugsweise eine Buchsenförderkette.

Weiterhin weist die Kettenfördereinrichtung ein Führungsgehäuse zur Führung der Förderkette bei dessen betriebsgemäßer Fortbewegung auf. Das Führungsgehäuse ist dabei nicht zwingend allseitig geschlossen ausgebildet, so dass die Förderkette zugänglich ist, beispielsweise um diese mit Schmierstoff zu versehen.

Die Kettenfördereinrichtung weist zumindest eine erste Laufschiene auf mit zwei Laufbahnen auf, wobei die erste Laufbahn der beiden Laufbahnen in Kontakt mit den Kettentragrollen der Förderkette steht. Allerdings ist zur optimalen Kraftverteilung ein spiegelsymmetrischer Aufbau der Kettenfördereinrichtung wünschenswert, so dass idealerweise eine zweite Laufschiene in spiegelsymmetrischer Anordnung zur ersten Laufschiene vorgesehen ist.

Die zweite Laufbahn der ersten Laufschiene ist für den Fall eines Verbrauchs der ersten Laufbahn durch Lösen der ersten Laufschiene und durch Wenden der Laufschiene zur Kontaktierung mit den Kettentragrollen bereitstellbar. Das Lösen der ersten Laufschiene kann vorzugsweise durch Lösen mechanischer Verbindungsmittel, vorzugsweise von Schrauben, erfolgen.

Die Laufschienen können aus einem Vergütungsstahl, z.B. C45k gefertigt sein, während weitere Bauteile des Führungsgehäuses aus Baustahl, z.B. St37 bestehen können. Zusätzlich können die Laufbahnen vorzugsweise oberflächenvergütet oder oberflächengehärtet ausgebildet sein.

Eine Laufbahn nimmt dabei idealerweise zumindest die Dimension der Mantelfläche der Kettentragrollen der Förderkette ein, welche auf der Laufbahn abrollen.

Zur Verbindung mit der Laufschiene nach dem Wendevorgang werden insbesondere die selben Schnittstellen oder Verbindungsstellen genutzt, an welchen auch die Laufschiene vor dem Wendevorgang befestigt war.

Durch das Wenden bzw. die wendbare Anordnung und Ausgestaltung der Laufschiene wird die Betriebszeit der Kettenfördereinrichtung verdoppelt. Dabei steht das Ersatzteil für die verbrauchte Lauffläche bereits direkt zur Verfügung.

Vorteilhafte weitere Ausgestaltungen der Erfindung sind Gegenstand der Unteransprüche.

Das Führungsgehäuse weisen erfindungsgemäß zwei Seitenwangen, insbesondere zwei zueinander spiegelsymmetrische Seitenwangen auf, wobei die Seitenwangen mit der zumindest ersten Laufschiene oder den beiden vorzugsweise symmetrisch angeordneten Laufschienen verbunden sind.

Als Verbindung wird erfindungsgemäß eine Durchsteckschraube genutzt.

Die Laufschiene oder die Laufschienen weist bzw. weisen vorteilhaft Buchsen zur Aufnahme und/oder Führung dieser Durchgangsschraube auf. Die Verwendung der Buchsen ermöglicht bei Belastung der Förderkette mit einer Traglast eine Kraftumleitung von Querkräften von den Buchsen zu den Seitenwangen, ohne dass die Durchgangsschraube auf Scherung belastet wird.

Zur Distanzierung der Laufschienen ist erfindungsgemäß eine Distanzhülse vorgesehen. Durch den Innenkanal der Distanzhülse wird die Durchgangsschraube gesteckt.

Die Buchsen und die Distanzhülse können besonders vorteilhaft einen Schraubkanal zur Durchführung der Durchgangsschraube zur Verbindung der beiden Seitenwangen aufweisen. Dadurch wird eine besonders günstige Kraftumleitung bei Belastung des Förderbandes erreicht und zugleich kann das Wenden der Laufschienen besonders nutzerfreundlich durch Lösen lediglich eines Verbindungsmittels, nämlich der Durchgangsschraube, erfolgen.

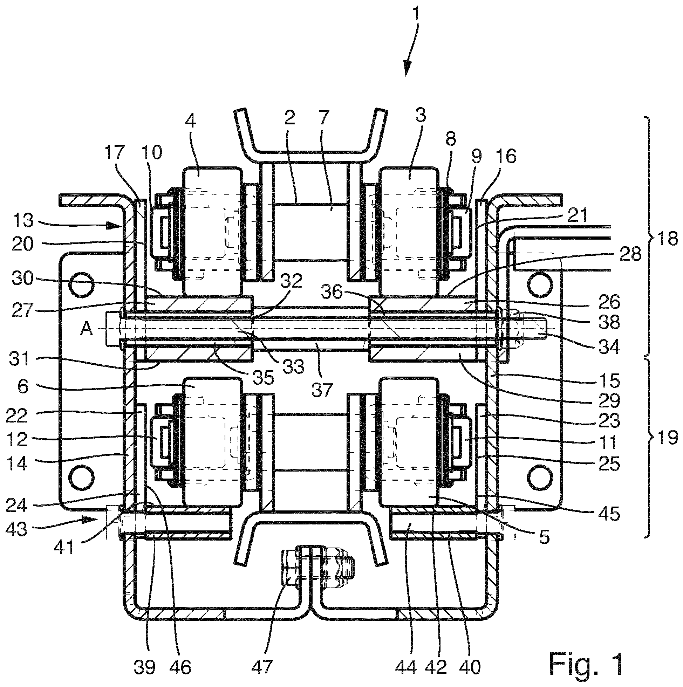

Der Schraubkanal ist dabei im Querschnitt senkrecht zur Transportrichtung der Kettenfördereinrichtung (siehe Fig. 1) vorteilhaft parallel zur Breite der Laufbahnen der jeweiligen Laufschiene und zur Rotationsachse der darauf abrollenden Kettentragrolle angeordnet.

Die Seitenwangen können zudem Materialbahnen mit Laufbahnen aufweisen, an welchen Kettenseitenführungsrollen der Förderkette bei randseitigem Kontakt der Förderkette mit den Materialbahnen abrollen können. Das Material der Laufschienen kann aus Baustahl oder Vergütungsstahl bestehen und/oder zumindest im Bereich der Laufbahnen oberflächenvergütet und/oder oberflächengehärtet sein.

Die Verbindung der einzelnen Bauteile der Kettenfördereinrichtung ist insbesondere schweißverbindungsfrei ausgebildet und kann ebenfalls bevorzugt ausschließlich durch mechanische Verbindungsmittel erfolgen.

Die Laufschienen können, z.B. in Abgrenzung zu einem Auflageblech oder dergleichen, vorzugsweise eine Dicke von zumindest 15 mm, vorzugsweise zumindest 20 mm, besonders bevorzugt zwischen 20-40 mm, aufweisen.

Die Laufschiene weist zudem auf einer Ebene parallel zur Laufbahn vorzugsweise keine Öffnungen oder Bohrungen zur Festlegung der Laufschiene auf.

Es ist weiterhin von Vorteil, wenn die Kettenfördereinrichtung Rücklaufschienen aufweist. An diesen Rücklaufschienen können die Kettentragrollen der Förderkette im Rücklauf abrollen. Da hier die Förderkette unbelastet ist, können die Rücklaufschienen jeweils durch gesonderte Befestigungsschrauben an den Seitenwangen festgelegt sein. Die Rücklaufschienen können eine geringere Wandstärke bzw. Materialstärke im Bereich der Laufbahnen aufweisen, da die mechanische Belastung auf die Laufbahnen wesentlich geringer im Rücklauf ist. Um allerdings weitere Ersatzteile bei Verbrauch der Laufbahnen der Laufschienen im Vorlauf vorzuhalten können die Rücklaufschienen besonders bevorzugt identisch zu den Laufschienen ausgebildet sein.

Wie bereits zuvor beschrieben, kann das Material der Laufschienen, insbesondere im Bereich der Laufbahnen, höher vergütet sein und/oder eine höhere Härte aufweisen als das Material der Seitenwangen.

Die Förderkette unterteilt das Führungsgehäuse in einen Vorlaufführungsbereich und einen Rücklaufführungsbereich. Der Vorlaufführungsbereich ist oberhalb des Rücklaufführungsbereichs angeordnet. Unterhalb des Rücklaufführungsbereichs ist vorteilhaft eine Wanne zur Schmutzsammlung angeordnet.

Die Förderkette kann zudem einen mitlaufenden Schaber aufweisen, welcher einen Abtransport von angesammelte Schmutz aus der Wanne ermöglicht.

Weiterhin erfindungsgemäß ist ein Verfahren zum Bereitstellen einer unverbrauchten Laufbahn einer erfindungsgemäßen Kettenfördereinrichtung, welches zumindest die folgenden Schritte aufweist:
a. Lösen der Durchgangsschraube, welche die erste Laufbahn mit einer Seitenwange verbindet oder verbinden,
b. Ausführen der Durchgangsschraube aus dem gesamten Schraubkanal
c. Wenden der Laufschiene
d. Durchführen der Durchgangsschraube durch den gesamten Schraubkanal und
e. Festlegen der Durchgangsschraube.

Nachfolgend wird die Erfindung anhand mehrerer Ausführungsvarianten näher beschrieben. Dabei werden identische Bauteile mit gleichen Bezugszeichen versehen. Die Erfindung ist nicht auf die Ausführungsbeispiele beschränkt. Insbesondere können auch einzelne konstruktive Merkmale aus den Ausführungsbeispielen auf andere nicht-dargestellte erfindungsgemäße Ausführungsbeispiele übertragen werden. Es zeigen:
- Fig. 1: Schnittdarstellung einer ersten Variante einer erfindungsgemäßen Kettenfördereinrichtung;
- Fig. 2a: Seitenansicht einer ersten Variante eines erfindungsgemäßen Schleppkettenförderers;
- Fig. 2b: Schnitt durch eine Laufbahn des Schleppkettenförderers;
- Fig. 2c: Draufsicht auf den Schleppkettenförderer;
- Fig. 2d: Schnittansicht des Schleppkettenförderers senkrecht zur Längsachse entlang einer Strebe;
- Fig. 2e: Schnittansicht des Schleppkettenförderers senkrecht zur Längsachse außerhalb des Bereichs einer Strebe;
- Fig. 2f: Perspektivansicht des Schleppkettenförderers;
- Fig. 3: Vorderansicht des Schleppkettenförderers mit einem aufgesetzten Transportgestell;
- Fig. 4: Schnittdarstellung einer nicht-erfindungsgemäßen Variante einer bekannten Kettenfördereinrichtung in der Ausführung eines Tragkettenförderers; und
- Fig. 5: Schnittdarstellung einer zweiten Variante einer erfindungsgemäßen Kettenfördereinrichtung.

Fig. 1 zeigt einen Querschnitt durch eine Kettenfördereinrichtung 1. Die Kettenfördereinrichtung 1 kann insbesondere als Tragkettenförderer ausgebildet sein oder sie kann als Fördereinheit eines Schleppkettenförderers 50 ausgebildet sein.

Die Kettenfördereinrichtung 1 der Fig. 1 wird nachfolgend zunächst als Tragkettenförderer beschrieben, bei welchem das Gewicht z.B. eines Transportgestells mit einem darauf angeordneten Transportgut direkt auf einer Förderkette 2 ruht.

Die Kettenfördereinrichtung 1 weist die besagte Förderkette 2 auf. Diese Förderkette 2 ist in der vorliegenden Ausführungsvariante als Buchsenförderkette ausgebildet. Die Förderkette 2 weist typischerweise einen Vorlauf und einen Rücklauf auf, wobei der Vorlauf in einem Endsegment umgelenkt wird und in einen Rücklauf verändert wird.

Die Förderkette 2 weist in Förderrichtung S eine Vielzahl reihenartig hintereinander angeordnete Kettentragrollen 3, 4, 5, 6 auf, welche zumindest das Gewicht der Kette tragen und ggf. das Gewicht des Transportgutes und welche in Förderrichtung S beispielsweise über Laschen 8 miteinander verbunden sind. Dabei sind jeweils zwei Kettentragrollen 3, 4, 5, 6, insbesondere hinsichtlich ihrer Rotationsachsen, parallel zueinander angeordnet und über einen Bolzen 7 miteinander verbunden. An der Förderkette 2 sind Kettenelemente angeordnet, welche einseitig über den Durchmesser der Kettentragrollen 3, 4, 5, 6 hervorstehen. Die Förderkette 2 weist zudem Kettenseitenführungsrollen 9, 10, 11, 12 auf, welche in Förderrichtung S hintereinander angeordnet sind. Die Rotationsachsen der Kettenseitenführungsrollen 9-12 sind dabei mit Versatz senkrecht zu den Rotationsachsen der Kettentragrollen 3-6 angeordnet.

Die Förderkette 2 ist beweglich gegenüber einem Führungsgehäuse 13 mit einem Vorlaufführungsbereich 18 zur Auflage und Führung des Vorlaufs der Förderkette 2 und einen Rücklaufführungsbereich 19 zur Führung des Rücklaufs der Förderkette 2 angeordnet. Dieses umfasst zwei spiegelsymmetrisch zueinander angeordnete Seitenwangen 14, 15. Diese Seitenwangen 14, 15 können identische Form aufweisen und aus einem Stahlblech gefertigt sein.

Die Seitenwangen 14, 15 weisen im Vorlaufführungsbereich 18 eine Materialbahn 16, 17 mit Laufbahnen 20 und 21 auf, an welchen die Kettenseitenführungsrollen 9-12 bei Kontakt abrollen können. Die Seitenwangen 14, 15 weisen im Rücklaufführungsbereich 19 ebenfalls eine Materialbahn 22, 23 mit Laufbahnen 24 und 25 auf, an welchen die Kettenseitenführungsrollen 9-12 bei Kontakt abrollen können.

Das Führungsgehäuse 13 weist im Vorlaufführungsbereich 18 zwei Laufschienen 26, 27 auf, an welchen jeweils eine Reihe der reihenartig hintereinander angeordneten Kettentragrollen 3, 4 abrollen können. Eine jede der Laufschienen 26, 27 weist jeweils zwei Laufbahnen 28 und 29 oder 30 und 31 auf, von denen allerdings nur jeweils eine Laufbahn 28, 30 in Kontakt mit den Kettentragrollen 3, 4 stehen. Die jeweils zweite Laufbahn 29, 31 kann durch Wenden der jeweiligen Laufschiene 26, 27 in den Bereitschaftszustand versetzt werden.

Die Laufschiene 26, 27 weist parallel zu den Laufbahnen 28, 29 oder 30, 31 ein Schraubkanalsegment 33 eines Schraubkanals 32 zur Durchführung einer Durchgangsschraube 34 auf. Der jeweilige Schraubkanal wird durch eine Buchse 35, 36 gebildet, welche in eine Bohrung in der Laufschiene 26, 27 eingesetzt ist. Die Buchse 35, 36 übernimmt die Krafteinleitung zur Seitenwange 14 und 15 hin bei Belastung der Förderkette 2 mit einem Transportgut, so dass die Krafteinleitung im Wesentlichen nicht durch die Durchgangsschraube 34 erfolgt. Diese ist lediglich mit einer Zugspannung belastet, welche durch die Schraubverbindung entsteht. Der Kraftverlauf der Querkräfte und/oder Scherkräfte erfolgt daher nicht nur über eine kraftschlüssige, sondern auch über eine formschlüssige Verbindung durch die Kraftübertragung auf die Buchsen und die Seitenwangen. Dabei ragt die Buchse auch in die für die Durchgangsschraube vorgesehene Öffnung der jeweiligen Seitenwange 14, 15 hinein.

Zur Distanzierung der Laufschienen 26, 27 wird eine Distanzhülse 37 eingesetzt, wobei die Längsachse A koaxial zu den Längsachsen der Buchsen 35, 36 der Laufschienen angeordnet ist, wodurch die Distanzhülse 37 gemeinsam mit den Buchsen 35, 36 einen Schraubkanal 32 zur Durchführung der Durchgangsschraube 34 ausbilden. Endständig ist die Durchgangsschraube 34 mit einer Mutter 38 verschraubt, wodurch die Schraube gegen eine Verschiebung längs zum Schraubkanal 32 gesichert ist. Somit sind die Seitenwangen 14, 15 und die beide Laufschienen 26, 27 im Vorlaufführungsbereich 18 durch eine einzige Durchgangsschraube 34 miteinander verbunden.

Der Rücklaufführungsbereich 19 weist zwei Rücklaufschiene 39, 40 mit entsprechenden Laufbahnen 41, 42 auf. Diese sind wendbar, so dass auch die Unterseiten als Laufbahnen nutzbar sind. Diese Rücklaufschienen 39, 40 dienen der Führung und/oder dem Abrollen der Kettentragrollen 5, 6 im Rücklauf, welche durch jeweils eine Befestigungsschraube 43, 44 miteinander verbunden sind.

Auch im Rücklaufführungsbereich 19 weist eine jeweilige Seitenwange 14, 15 ebenfalls jeweils eine Materialbahn 22, 23 mit Laufbahnen 45 und 46 auf, an welchen die Kettenseitenführungsrollen 9-12 bei Kontakt abrollen können.

Unterhalb des Rücklaufführungsbereichs 19 sind die Seitenwangen 14 und 15 in einem Kontaktbereich übereinander angeordnet und mittels einer Verbindungsschraube 47 miteinander verbunden.

Die Verbindung der Seitenwangen 14, 15 untereinander und die Verbindung der Seitenwangen 14, 15 mit der Laufschiene 26, 27 und der Rücklaufschiene 39, 40 sind unverschweißt, so dass insbesondere auch die Wendbarkeit und die Nutzung der Laufbahnen auf beiden Seiten der Laufschienen gegeben sind.

Das Material der Laufschienen 26, 27 und optional auch der Rücklaufschiene 39, 40 ist vorteilhaft aus einem Stahlmaterial höherer Güte als das Material der Seitenwange. Das Material der Seitenwangen 14, 15 kann beispielsweise aus einem Baustahl hergestellt sein. Das Material der Laufschienen 26, 27 und optional auch der Rücklaufschienen 39, 40, ist vorteilhaft aus einem C45k-Vergütungsstahl. Die Laufbahnen 39-42 der vorgenannten Laufschienen aber auch der Rücklaufschienen können optional zusätzlich vergütet und/oder gehärtet sein. Dies kann beispielsweise durch ein Randschichthärten erfolgen.

Die Distanzhülse 37 ist insbesondere mittig zwischen den beiden Laufschienen 26 und 27 angeordnet.

Die Buchsen 35, 36 können innerhalb der Laufschienen 26, 27 angeordnet sein und können zur Aufnahme von Radialkräfte dienen. Ihre Wandstärke ist lastabhängig und kann vorzugsweise zumindest 3 mm betragen.

Der Rücklaufführungsbereich 19 weist keine Durchgangsschraube auf, sondern, wie dargestellt, die beiden Befestigungsschrauben 43, 44.

Während der Vorlauf der Förderkette 2 im Fall des Tragkettenförderers die Last des Transportgutes trägt, wird im Rücklaufbereich lediglich das Gewicht der Kette getragen, so dass die Befestigungsschrauben 43, 44 für das Gewicht der Förderkette hinreichend sind. Daher ist die Wandstärke der Rücklaufschienen 39, 40 geringer ausgebildet als die Wandstärke der Laufschienen 26 und 27. Es kann allerdings von Vorteil sein, die Rücklaufschienen analog zu den Laufschienen auszubilden, so dass bei Verbrauch der Laufflächen bzw. Laufbahnen der Laufschienen die Laufschienen gegen die Rücklaufschienen gewechselt werden können.

Wird durch die Wendbarkeit der Laufschienen durch beidseitiges Anordnen von Laufbahnen die Betriebszeit des vorgenannten Tragkettenförderers verdoppelt, so kann durch die Auswechslung der Laufschienen durch identisch ausgebildete Rücklaufschienen sogar vervierfacht werden.

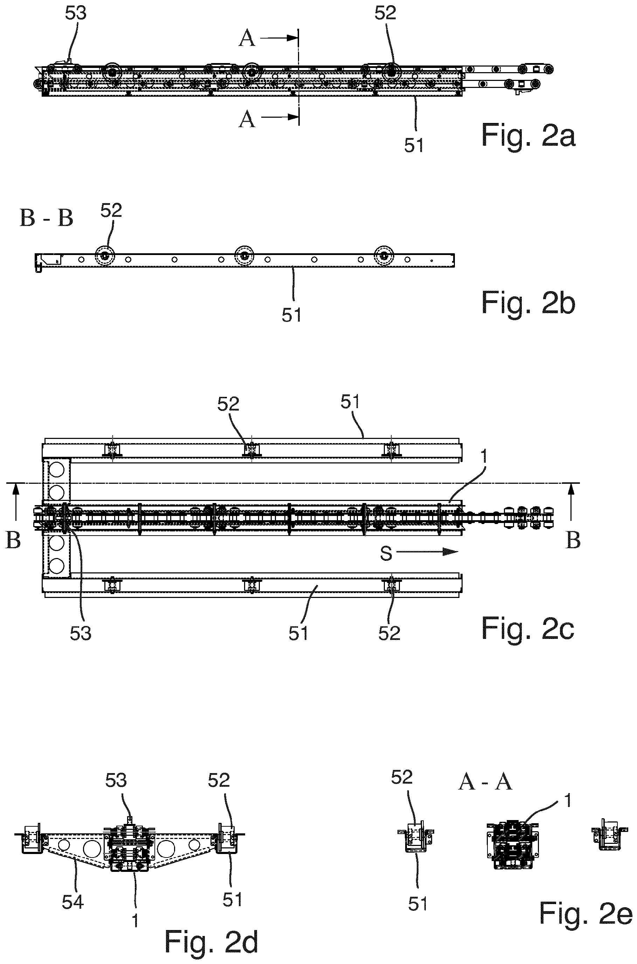

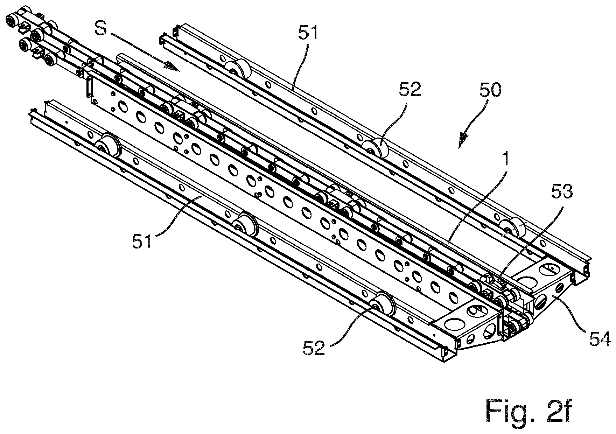

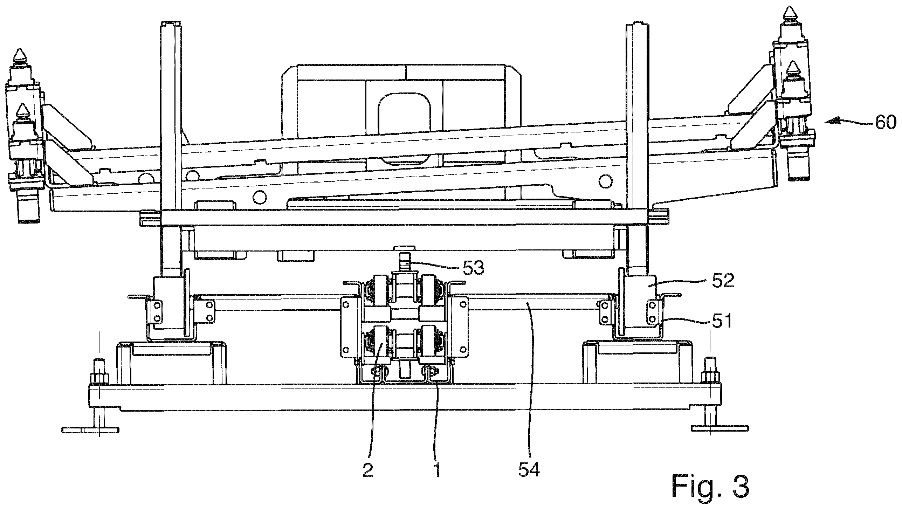

Fig. 2 a-f und 3 zeigten die Kettenfördereinrichtung 1 als Fördereinheit eines Schleppkettenförderers 50. Die dargestellte Fördereinheit kann im Fall eines Schleppkettenförderers vorzugsweise mittig zwischen zwei Laufschienen 51 mit einer Vielzahl von drehbar gelagerten Rollen 52 angeordnet sein. Auf den Rollen ist ein Transportgestell 60, welches auch als "Rack" bezeichnet wird, angeordnet. Dieses ist beispielhaft in Fig. 3 dargestellt.

Das Transportgestell 60 kann lediglich auf die Rollen 52 der Laufschienen 51 aufgesetzt sein, so dass es beispielsweise durch einen kranartigen Greifer abnehmbar ist. Alternativ kann das Transportgestell 60 auch endständig abgerollt werden.

Eine typische Anwendung für die Kettenfördereinrichtung 1 ist der Transport von Autokarosserien durch eine Lackier- oder Montageanlage. Eine Autokarosserie ist auf dem vorgenannten Transportgestell angeordnet und wird mit diesem durch die Kettenfördereinrichtung 1 durch die jeweilige Lackier- oder Montageanlage gefördert.

Hierfür sind an der Förderkette 2 abschnittsweise Mitnehmer 53 angeordnet, welche mit dem Transportgestell 60 koppeln, beispielsweise an das Transportgestell 60 anschlagen, und dieses in Förderrichtung S mitschleppen.

Zur Distanzierung der Laufschienen 51 von der Kettenfördereinrichtung 1 sind senkrecht zur Förderrichtung S verlaufende Streben 54, vorzugsweise in Form von L-Profilen, vorgesehen, welche die Kettenfördereinrichtung 1 mit den Laufschienen 51 verbinden.

Fig. 4 zeigt eine Kettenfördereinrichtung 101 in der Ausgestaltung als Tragkettenförderer nach dem Stand der Technik. Die Förderkette 102 ist im Wesentlichen identisch zur Förderkette 2, allerdings weisen die Seitenwangen 115 und 116 L-Profile 104, 105 auf. Diese liegen zur zusätzlichen Stabilisierung auf einem Doppelblech 110 auf, welches mit den Seitenwänden verschraubt und verschweißt ist. Eine Verwendung der Unterseite der L-Profile 104, 105 als Ersatzlaufbahn ist hierbei aufgrund der mechanischen Ausgestaltung der Kettenfördereinrichtung 101 ausgeschlossen. Darüber hinaus ist aufgrund der zusätzlichen Bauteile zur Stabilisierung und zur Lastaufnahme der Materialbedarf und damit auch das Gewicht Kettenförderers insgesamt deutlich höher als bei der erfindungsgemäßen Variante der Fig. 1 und 2, welche zudem im Bedarfsfall schnell demontierbar ist.

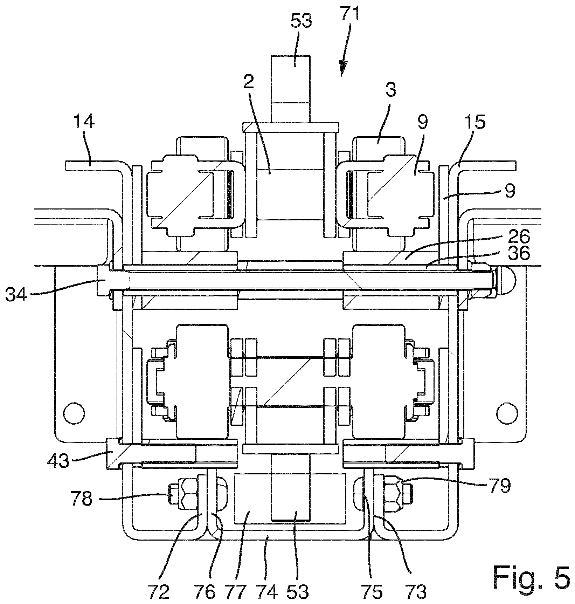

Fig. 5 zeigt eine gegenüber der Fig. 1 erweiterte Variante einer Kettenfördereinrichtung 71 allerdings in leicht versetzter Schnittebene, so dass der Schnitt nunmehr mittig durch die Kettenseitenführungsrollen und durch die Durchgangsschraube verläuft, wobei nachfolgend lediglich auf die Wesentlichen Unterschiede zur Ausgestaltungsvariante der Fig. 1 eingegangen wird.

Im unteren Bereich der Kettenfördereinrichtung 71 weisen die Seitenwangen 14, 15 jeweils u-förmige Schenkel 72, 73 auf, zwischen welchen eine u-förmige Wanne 74 angeordnet ist. Diese Wanne 74 ist an ihren randseitigen Schenkeln 75, 76 mit den Schenkeln 72, 73 der Seitenwangen 14, 15 durch Verbindungsschrauben 78, 79 verbunden.

Die Wanne 74 verläuft in Förderrichtung S zumindest über einen Teilbereich der Förderkette 2 oder vorzugsweise über die gesamte Länge der Förderkette 2. Sie dient dem Auffang von Schmutz, insbesondere Schmiermittel und/oder je nach Anwendungsgebiet der Kettenfördereinrichtung 71 zum Auffang von Lackresten, Farben, Klebstoffen, Grundierungsmittel oder dergleichen.

An der Förderkette 2 kann vorteilhaft ein Schaber 77 angeordnet sein zur Mitnahme des angesammelten Schmutzes in Förderrichtung S. Der Schaber 77 kann auch als Räumer bezeichnet werden. Er ist an der Förderkette 2 angeordnet und läuft mit dieser mit. Der Schaber 77 kann zusätzlich zum Mitnehmer 53 vorgesehen sein oder er kann beispielsweise als ein Aufsatz auf den Mitnehmer 53 ausgebildet sein. Im Fall eines Aufsatzes können nicht näher dargestellte Verbindungsmittel, z.B. Rastmittel oder dergleichen am Aufsatz oder am Mitnehmer 53 ausgebildet sein.

Der Schaber 77 ist dabei vorteilhaft derart ausgebildet, dass er sich zumindest über 50% der Breite der Wanne, vorzugsweise über 75% der Breite der Wanne erstreckt um eine möglichst umfangreiche Mitnahme des Schmutzes zu ermöglichen.

Die Wanne 74 kann entlang ihrer Länge nicht-dargestellte Auslassöffnungen zur Ablassen des ausgeschabten Schmutzes aufweisen. Alternativ kann die Wanne 74 in mehrere Profilsegmente z.B. U-Profilsegmente unterteilt sein, welche in Förderrichtung S hintereinander angeordnet sind und welche zueinander einen Zwischenraum zum Ablass des Schmutzes aufweisen.

Zusätzlich zu dem Schaber kann im Fall von fest anhaftenden Schmutz wie z.B. Lackresten eine Reinigungsvorrichtung mit Sprühdüsen zum Aufbringen einer Reinigungsflüssigkeit in die Wanne 75 an der Förderkette angeordnet werden. Sollten sich dabei Fluidleitungen bei dem jeweiligen Transportweg als zu kurz oder unpraktisch erweisen, so kann zum Aufbringen die Reinigungsvorrichtung batterie- oder akkubetrieben ausgebildet sein und ein Fluidtank aufweisen. Der Batterie- bzw. Akkubetrieb gewährleitstet den Betrieb einer Pumpe zur Förderung des Reinigungsfluids aus dem Fluidtank.

Über die Sprühdüse kann sodann ein Reinigungsfluid z.B. Aceton, Lösungsmittel oder Alkohol auf die Lackreste aufgebracht werden, so dass ein Anlösen erfolgt, wodurch die mechanische Reinigung durch den Schaber 77 zusätzlich verbessert werden.

Die vorbeschriebene Reinigungsvorrichtung kann ebenfalls auf einen Mitnehmer 53 aufgesteckt werden.

### Bezugszeichen

- 1: Kettenfördereinrichtung
- 2: Förderkette
- 3: Kettentragrolle
- 4: Kettentragrolle
- 5: Kettentragrolle
- 6: Kettentragrolle
- 7: Bolzen
- 8: Lasche
- 9: Kettenseitenführungsrolle
- 10: Kettenseitenführungsrolle
- 11: Kettenseitenführungsrolle
- 12: Kettenseitenführungsrolle
- 13: Führungsgehäuse
- 14: Seitenwange
- 15: Seitenwange
- 16: Materialbahn
- 17: Materialbahn
- 18: Vorlaufführungsbereich
- 19: Rücklaufführungsbereich
- 20: Laufbahn
- 21: Laufbahn
- 22: Materialbahn
- 23: Materialbahn
- 24: Laufbahn
- 25: Laufbahn
- 26: Laufschiene
- 27: Laufschiene
- 28: Laufbahn
- 29: Laufbahn
- 30: Laufbahn
- 31: Laufbahn
- 32: Schraubkanal
- 33: Schraubkanalsegment
- 34: Durchgangsschraube
- 35: Buchse
- 36: Buchse
- 37: Distanzhülse
- 38: Mutter
- 39: Rücklaufschiene
- 40: Rücklaufschiene
- 41: Laufbahn
- 42: Laufbahn
- 43: Befestigungsschraube
- 44: Befestigungsschraube
- 45: Laufbahn
- 46: Laufbahn
- 47: Verbindungsschraube

- 50: Schleppkettenförderer

- 51: Laufbahn

- 52: Rollen

- 53: Mitnehmer

- 54: Strebe

- 60: Transportgestell
- 71: Kettenfördereinrichtung
- 72: Schenkel einer Seitenwange
- 73: Schenkel einer Seitenwange
- 74: Wanne
- 75: Schenkel der Wanne
- 76: Schenkel der Wanne
- 77: Schaber

- 101: Kettenfördereinrichtung
- 102: Förderkette
- 104: L-Profil
- 105: L-Profil
- 110: Doppelblech
- 114: Seitenwange
- 115: Seitenwange

- S: Förderrichtung
- A: Längsachse (Schraubkanal)

## Patentansprüche

1. Kettenfördereinrichtung (1) umfassend eine Förderkette (2) mit Kettentragrollen (3-6) und ein Führungsgehäuse (13) zur Führung der Förderkette (2) bei dessen betriebsgemäßer Fortbewegung, wobei die Kettenfördereinrichtung zumindest zwei Laufschienen (26, 27) aufweist, mit jeweils zwei Laufbahnen (28, 29 oder 30, 31) wobei jeweils die erste Laufbahn (28 oder 30) der zwei Laufbahnen (28, 29 oder 30, 31) in Kontakt mit den Kettentragrollen (3-6) der Förderkette (2) steht und wobei jeweils die zweite Laufbahn (29, 31) der zwei Laufbahnen (28, 29 oder 30, 31) für den Fall eines Verbrauchs der ersten Laufbahn (28, 30) durch Lösen der Laufschiene (26, 27) und durch Wenden der Laufschiene (26, 28) bereitstellbar ist;
wobei das Führungsgehäuse zwei Seitenwangen (14, 15), insbesondere zwei zueinander spiegelsymmetrische Seitenwangen, aufweist, wobei die Seitenwangen (14, 15) mit der Laufschienen (26, 27) verbunden sind;
**dadurch gekennzeichnet, dass**
als Verbindung eine Durchgangsschraube (34) genutzt wird;
wobei die Laufschienen (26 und 27) über eine Distanzhülse (37) voneinander distanziert sind, wobei durch den Innenkanal der Distanzhülse (37) die Durchgangsschraube gesteckt wird.

2. Kettenfördereinrichtung nach Anspruch 1, **dadurch gekennzeichnet, dass** die Laufschienen (26 und 27) Buchsen (35, 36) zur Aufnahme und/oder Führung der Durchgangsschraube (34) aufweisen.

3. Kettenfördereinrichtung nach Anspruch 2, **dadurch gekennzeichnet, dass** die Buchsen (35, 36) und die Distanzhülse (37) einen Schraubkanal (32) zur Durchführung der Durchgangsschraube (34) zur Verbindung der beiden Seitenwangen (14 und 15) aufweist.

4. Kettenfördereinrichtung nach einem der vorhergehenden Ansprüche, **dadurch gekennzeichnet, dass** die Seitenwangen (14, 15) Materialbahnen (16, 17) mit Laufbahnen (24, 25) zum Kontakt und Abrollen mit Kettenseitenführungsrollen (9-12) aufweisen.

5. Kettenfördereinrichtung nach einem der vorhergehenden Ansprüche, **dadurch gekennzeichnet, dass** die Laufschienen eine Dicke von zumindest 15 mm, vorzugsweise zumindest 20 mm, besonders bevorzugt zwischen 20-40 mm, aufweisen.

6. Kettenfördereinrichtung nach einem der vorhergehenden Ansprüche, **dadurch gekennzeichnet, dass** die Kettenfördereinrichtung (1) Rücklaufschienen (39, 40) aufweist, welche jeweils durch gesonderte Befestigungsschrauben (43, 44), an den Seitenwangen (14, 15) festgelegt sind, wobei die Rücklaufschienen besonders bevorzugt identisch zu den Laufschienen (16, 17) ausgebildet sind.

7. Kettenfördereinrichtung nach einem der vorhergehenden Ansprüche, **dadurch gekennzeichnet, dass** das Material der Laufschienen (26, 27), insbesondere im Bereich der Laufbahnen (28-31), höher vergütet sind und/oder eine höhere Härte aufweisen als das Material der Seitenwangen (14, 15).

8. Kettenfördereinrichtung nach einem der vorhergehenden Ansprüche, **dadurch gekennzeichnet, dass** die Förderkette (2) das Führungsgehäuse (13) in einen Vorlaufführungsbereich (18) und einen Rücklaufführungsbereich (19) unterteilt, wobei der Vorlaufführungsbereich (18) oberhalb des Rücklaufführungsbereichs (19) angeordnet ist und wobei unterhalb des Rücklaufführungsbereichs eine Wanne (74) zur Schmutzsammlung angeordnet ist.

9. Kettenfördereinrichtung nach Anspruch 8, **dadurch gekennzeichnet, dass** die Förderkette (2) einen mitlaufenden Schaber (77) aufweist, zum Abtransport von angesammelte Schmutz aus der Wanne (74).

10. Kettenfördereinrichtung nach einem der vorhergehenden Ansprüche, **dadurch gekennzeichnet, dass** die Kettenfördereinrichtung einen spiegelsymmetrischen Aufbau aufweist.

11. Kettenfördereinrichtung nach einem der vorhergehenden Ansprüche, **dadurch gekennzeichnet, dass** die Kettenfördereinrichtung (1) Teil eines Trag- oder Schleppkettenförderers (50) ist.

12. Verfahren zum Bereitstellen einer unverbrauchten Laufbahn einer Kettenfördereinrichtung nach Anspruch 3 oder nach einem der Ansprüche 4-11 wenn abhängig von Anspruch 3 **gekennzeichnet, durch die folgenden Schritte:**
a. Lösen der Durchgangsschraube (34)
b. Ausführen der Durchgangsschraube (34) aus dem gesamten Schraubkanal (32)
c. Wenden der Laufschiene (26, 27)
d. Durchführen der Durchgangsschraube (34) durch den gesamten Schraubkanal (32) und
e. Festlegen der Durchgangsschraube (34)

## Claims

1. Chain conveyor device (1) comprising a conveyor chain (2) having chain support rollers (3-6) and a guide housing (13) for guiding the conveyor chain (2) during its operational advance, wherein the chain conveyor device has at least two running rails (26, 27), each with two raceways (28, 29 or 30, 31), wherein in each case the first raceway (28 or 30) of the two raceways (28, 29 or 30, 31) is in contact with the chain support rollers (3-6) of the conveyor chain (2) and wherein in each case the second raceway (29, 31) of the two raceways (28, 29 or 30, 31) can be made available in the event of the first raceway (28, 30) being used up by releasing the running rail (26, 27) and by turning the running rail (26, 28);
wherein the guide housing has two side cheeks (14, 15), in particular two side cheeks which are mirror-symmetrical with respect to one another, wherein the side cheeks (14, 15) are connected to the running rails (26, 27); **characterized in that** a through-bolt (34) is used as connection;
wherein the running rails (26 and 27) are spaced apart from one another via a spacer sleeve (37), wherein the through-bolt is inserted through the inner channel of the spacer sleeve (37).

2. Chain conveyor device according to claim 1, **characterized in that** the running rails (26 and 27) have bushes (35, 36) for accommodating and/or guiding the through-bolt (34).

3. Chain conveyor device according to claim 2, **characterized in that** the bushes (35, 36) and the spacer sleeve (37) have a screw channel (32) for the passage of the through-bolt (34) for connecting the two side cheeks (14 and 15).

4. Chain conveyor device according to one of the preceding claims, **characterized in that** the side cheeks (14, 15) have material tracks (16, 17) with raceways (24, 25) for contacting and rolling with chain side guide rollers (9-12).

5. Chain conveyor device according to one of the preceding claims, **characterized in that** the running rails have a thickness of at least 15 mm, preferably at least 20 mm, more preferably between 20-40 mm.

6. Chain conveyor device according to one of the preceding claims, **characterized in that** the chain conveyor device (1) has return rails (39, 40), which are each fixed to the side cheeks (14, 15) by separate fixing screws (43, 44), wherein the return rails are particularly preferably designed identically to the running rails (16, 17).

7. Chain conveyor device according to one of the preceding claims, **characterized in that** the material of the running rails (26, 27), in particular in the region of the raceways (28-31), are more highly tempered and/or have a higher hardness than the material of the side cheeks (14, 15).

8. Chain conveyor device according to one of the preceding claims, **characterized in that** the conveyor chain (2) divides the guide housing (13) into a forward guide region (18) and a return guide region (19), wherein the forward guide region (18) is arranged above the return guide region (19) and wherein a trough (74) for collecting dirt is arranged below the return guide region.

9. Chain conveyor device according to claim 8, **characterized in that** the conveyor chain (2) has a travelling scraper (77) for removing accumulated dirt from the trough (74).

10. Chain conveyor device according to one of the preceding claims, **characterized in that** the chain conveyor device has a mirror-symmetrical structure.

11. Chain conveyor device according to one of the preceding claims, **characterized in that** the chain conveyor device (1) is part of a carrying or dragging chain conveyor (50).

12. Method for providing an unused track of a chain conveyor device according to claim 3 or according to one of claims 4-11 if dependent on claim 3, **characterized by the following steps:**
a. loosening the through-bolt (34);
b. removing the through-bolt (34) from the entire bolt channel (32);
c. turning of the running rail (26, 27);
d. feeding the through-bolt (34) through the entire screw channel (32) and
e. tightening the through-bolt (34).

## Revendications

1. Dispositif de convoyeur à chaîne (1) comprenant une chaîne de transfert (2) avec des rouleaux de chaîne porteurs (3-6) et un boîtier de guidage (13) pour le guidage de la chaîne de transfert (2) dans son déplacement en service, lequel dispositif de convoyeur à chaîne comprend au moins deux rails de circulation (26, 27) munis chacun de deux pistes (28, 29 ou 30, 31), la première piste (28 ou 30) des deux pistes (28, 29 ou 30, 31) étant en contact avec les rouleaux de chaîne porteurs (3-6) de la chaîne de transfert (2) et la deuxième piste (29, 31) des deux pistes (28, 29 ou 30, 31) pouvant être mise à disposition en cas d'usure de la première piste (28, 30) par le détachement du rail de circulation (26, 27) et le retournement du rail de circulation (26, 28),
dans lequel le boîtier de guidage présente deux joues latérales (14, 15), en particulier deux joues latérales symétriques en miroir, lesquelles joues latérales (14, 15) sont assemblées aux rails de circulation (26, 27),
**caractérisé en ce que** l'assemblage utilise une vis traversante (34), les rails de circulation (26 et 27) étant écartés l'un de l'autre par une bague d'écartement (37), la vis traversante étant insérée à travers le canal intérieur de la bague d'écartement (37).

2. Dispositif de convoyeur à chaîne selon la revendication 1, **caractérisé en ce que** les rails de circulation (26 et 27) présentent des douilles (35, 36) destinées à recevoir et/ou à guider la vis traversante (34).

3. Dispositif de convoyeur à chaîne selon la revendication 2, **caractérisé en ce que** les douilles (35, 36) et la bague d'écartement (37) comportent un canal de vissage (32) pour le passage de la vis traversante (34) en vue de l'assemblage des deux joues latérales (14 et 15).

4. Dispositif de convoyeur à chaîne selon l'une des revendications précédentes, **caractérisé en ce que** les joues latérales (14, 15) présentent des bandes de matériau (16, 17) avec des pistes (24, 25) pour le contact et le roulage de galets de guidage latéral de la chaîne (9-12).

5. Dispositif de convoyeur à chaîne selon l'une des revendications précédentes, **caractérisé en ce que** les rails de circulation ont une épaisseur d'au moins 15 mm, de préférence d'au moins 20 mm, en particulier de 20 à 40 mm.

6. Dispositif de convoyeur à chaîne selon l'une des revendications précédentes, **caractérisé en ce que** le dispositif de convoyeur à chaîne (1) comporte des rails de retour (39, 40) qui sont fixés chacun par des vis de fixation (43, 44) séparées sur les joues latérales (14, 15), les rails de retour ayant de préférence une forme identique à celle des rails de circulation (16, 17).

7. Dispositif de convoyeur à chaîne selon l'une des revendications précédentes, **caractérisé en ce que** le matériau des rails de circulation (26, 27) est plus fortement affiné et/ou présente une plus grande dureté que celui des joues latérales (14, 15), en particulier au niveau des pistes (28-31).

8. Dispositif de convoyeur à chaîne selon l'une des revendications précédentes, **caractérisé en ce que** la chaîne de transfert (2) divise le boîtier de guidage (13) en une zone de guidage d'avance (18) et une zone de guidage de retour (19), la zone de guidage d'avance (18) étant disposée au-dessus de la zone de guidage de retour (19) et une auge (74) étant disposée en dessous de la zone de guidage de retour (74) pour la collecte d'impuretés.

9. Dispositif de convoyeur à chaîne selon la revendication 8, **caractérisé en ce que** la chaîne de transfert (2) présente une raclette (77) entraînée avec elle pour évacuer les impuretés accumulées dans l'auge (74).

10. Dispositif de convoyeur à chaîne selon l'une des revendications précédentes, **caractérisé en ce qu'**il présente une construction symétrique en miroir.

11. Dispositif de convoyeur à chaîne selon l'une des revendications précédentes, **caractérisé en ce que** le dispositif de convoyeur à chaîne (1) fait partie d'un convoyeur à chaîne porteuse ou à raclettes (50).

12. Procédé de mise à disposition d'une piste de circulation non usée dans un dispositif de convoyeur à chaîne selon la revendication 3 ou selon l'une des revendications 4 à 11 si elle est dépendante de la revendication 3, **caractérisé en ce qu'**il comprend les étapes suivantes :
a. desserrage de la vis traversante (34) ;
b. extraction de la vis traversante (34) du canal de vissage (32) entier ;
c. retournement du rail de circulation (26, 27) ;
d. insertion de la vis traversante (34) à travers le canal de vissage (32) entier et
e. serrage de la vis traversante (34).
